# EUROPEAN PATENT SPECIFICATION

(11) **EP 2 459 939 B1**
(45) Date of publication and mention of the grant of the patent: **26.04.2017**
(21) Application number: 10801821.9
(22) Date of filing: 19.07.2010
(51) Int. Cl.: F24J 2/02, A47J 27/00, A47J 36/24, F24J 2/05

(54) **SOLAR COOKING APPLIANCES**
SOLARKOCHVORRICHTUNGEN
APPAREILS DE CUISSON SOLAIRES

(30) Priority: 23.07.2009 CA 2673703
(43) Date of publication of application: 06.06.2012
(73) Proprietor: LIN, Huazi, Richmond Hill, ON L4S 1H2 (CA); W&E International (Canada) Corp., Richmond Hill, Ontario L4S 1H2 (CA)
(72) Inventor: LIN, Huazi, Richmond Hill, Ontario L4S 1H2 (CA)
(74) Representative: Tomkinson, Alexandra
(86) International application number: PCT/CA2010/001119
(87) International publication number: WO 2011/009200

(56) References cited:
- CN-Y- 201 206 904
- DE-A1- 3 044 192
- DE-A1- 3 544 039
- DE-A1- 4 338 736
- DE-U1- 29 500 709
- STUMPF P ET AL: "COMPARATIVE MEASUREMENTS AND THEORETICAL MODELLING OF SINGLE- AND DOUBLE-STAGE HEAT PIPE COUPLED SOLAR COOKING SYSTEMS FOR HIGH TEMPERATURES", SOLAR ENERGY, PERGAMON PRESS. OXFORD, GB, vol. 71, no. 1, 1 January 2001 (2001-01-01), pages 1-10, XP001150421, ISSN: 0038-092X, DOI: 10.1016/S0038-092X(01)00026-3
- MULLER, HEINZ-JOACHIM: 'Solar Steam Cooker' 46TH ANZSES (AUSTRALIAN AND NEW ZEALAND SOLAR ENERGY SOCIETY) CONFERENCE [ONLINE], ISES-AP 2008, [Online] 2008, XP008151178 Retrieved from the Internet: <URL:http://www.sun2steam.com.au/solarcooke r/cooker.pdf> [retrieved on 2010-10-12]

## Description

### FIELD OF TECHNOLOGY

The present disclosure relates to solar heat application field, especially related to solar cooking appliances to cook the food in the solar heat collector.

### BACKGROUND

For all kinds of existing energy sources in the earth, solar energy is the most widespread, the richest and the most uniformly distributed energy source. Solar energy can be used very easily. It is available every day, everywhere and for everybody.

For all kinds of human energy consuming activities, food and beverage is the most often activity and has the longest history. Everybody in anywhere needs to cook the foods every day.

It is very interesting and valuable topic to use solar energy for food cooking. There are many efforts in this field. (Please refer to the existing patents).

The solar power on a unit earth area is not large. The solar radiation intensity is varied from North to South and from morning to afternoon. It depends on the weather and is also different in four seasons, so that to develop an economic solar cooking appliance is always a challenge and need continue efforts.

In view of these difficulties, some solar cooking appliances tried to make the sunlight receiving area as large as possible. But the heat insulation for the received heat is difficult. Some solar cooking appliances follow and focus the sunlight using expensive automation system and need additional power to run the system. Some solar cooking appliances also use the heat storage materials. The materials may be expensive and not easy to get.

The present disclosure absorbs the historic experience and combines the new solar water heating technologies and developed a set of economic and practicable solar cooking appliances.
DE4338736 discloses a cooker or heater connected to a solar energy absorber with a cooking and/or roasting system thermally connected. The solar energy absorber has heat energy storage in the form of a core of concrete. The cooking and roasting system is fitted on one side of the core. The solar absorber is fitted on the opposite side and is thermally connected.

### SUMMARY

The object of this disclosure is to improve the existing technologies and provide a set of solar cooking appliances that is economy, easy to manufacture and use and high efficient.
According to the present invention there is provided a solar cooking appliance as set out in claim 1.
The invention takes the following steps to overcome the difficulties of applying solar energy for food cooking:

To use the evacuated solar heat collector for optimum heat collecting;
To use the heat storage and conducting material in the evacuated solar heat collector for storing and saving heat to provide a continuous and stable cooking heat;

A light reflector focuses the surrounding light to the cooking appliances;

A sundial indicates the light direction, an adjustable and rotatable fixing and supporting trestle allows the highest solar power to be received;

An electric power supply provides a backup power source when the solar power is not enough. Furthermore, the solar cooking appliances also provide backup or energy storage equipment during low electricity price periods for cooking on electric power outage.

A detailed summary of present disclosure follows.

In one embodiment of the present disclosure there is provided a set of solar cooking appliances, comprising: a solar heat collector wherein the solar heat is collected and stored, furthermore food is cooked or heated inside, said solar heat collector having a removable part for covering during cooking; the heat storage and conducting material partially fills said solar heat collector; a set of solar cooking utensils, each said utensil having the size and shape to fit the internal size and shape of the solar heat collector for a closed heat connection with the inner wall of said solar heat collector and also with said heat storage and conducting material within said solar heat collector; each said utensil having a removable part for closing said utensil during cooking; a utensil is located in said solar heat collector during cooking; and the necessary accessories that include a fixing and supporting trestle with a rotatable base and adjustable incidence angle that arranges and supports each part of the solar cooking appliance at a proper situation; the light reflecting object and a cone bar attached to the solar heat collector perpendicularly to show the angle of sun light;

The said solar heat collector is an evacuated-tube solar heat collector; or a group of modular evacuated-tube solar heat collectors that are mounted in a certain shape, e.g. in a parallel row, in a full or partial cone-shaped column, etc. The said heat collector compromises a heat storage and conducting material which is a solid material, and a heat conducting material which is inserted in said heat storage and conducting material and which is selected from the group of a heat tube and a heat conductive conductor. For safety reason, a transparent cover or evacuated toughened-glass tube solar heat collector are suggested.

In accordance with another embodiment of the present disclosure there is provided a set of solar cooking utensils, each of said utensil is a cylinder container made of stainless steel, that is located in an evacuated-tube solar heat collector, having a removable and detachable handle at the inner wall; said container having a diameter near but not bigger than the inner diameter of said evacuated-tube solar heat collector; a pleated structure on the wall of said container from the top to the bottom to provide a gap and patch for air exchange and allow a minor adjustable diameter for said container. These utensils can be a solar coffee/tea maker, a steamer, a solar cooking fryer; a cooking wok or pot, a boiler, a cooking pan etc.

In accordance with another embodiment of the present disclosure there is provided a set of solar cooking appliances that mainly use the solar heat, but use electricity as a backup, comprising, a solar heat collector wherein the solar heat is collected and stored, furthermore food is cooked or heated inside, said solar heat collector having a removable part for covering during cooking; the heat storage and conducting material that partially filled in said solar heat collector; a set of solar cooking utensils, each said utensil having the size and shape to fit the internal size and shape of the solar heat collector for a closed heat connection with the inner wall of said solar heat collector and also with said heat storage and conducting material within said solar heat collector; each said utensil having a removable part for closing said utensil during cooking; a utensil is located in said solar heat collector during cooking; and the necessary accessories that include a fixing and supporting trestle with a rotatable base and adjustable incidence angle that arrange and support each part of the solar cooking appliances at a proper situation; a light reflecting object and a cone bar attached to the solar heat collector perpendicularly to show the angle of sun light; an electric heat element with power supply and a measuring, indication and controlling systems for the solar cooking appliance's operating characteristic parameter, e.g. timing, temperature, pressure, moisture etc.

Other aspects and features of the present disclosure will become apparent to those ordinarily skilled in the art upon review of the following description of specific embodiments of the invention in conjunction with the accompanying figures.

### BRIEF DISCRETION OF THE DRAWINGS

In the figures which illustrate exemplary embodiments of this invention:
Fig. 1 is a schematic diagram illustrating an evacuated-tube solar cooking appliances in vertical section and cross section view;
Fig. 2 is a set of solar cooking appliances is illustrated schematically in a perspective view;
Fig. 3 illustrates schematically a set of exemplary solar heat collectors in vertical section view;

### DETAILED DESCRIPTION

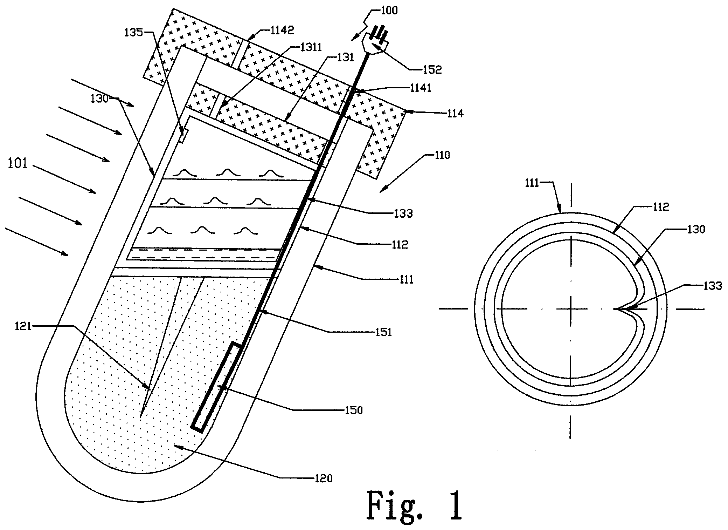

Referring to Fig.1, an evacuated-tube solar cooking appliance is illustrated in vertical section and cross section view during use.

Solar cooking appliance 100 includes a solar heat collector 110, a heat storage and conducting material 120, a heat conducting medium 121, a solar cooking utensil 130, a removable part 114 of 110 and a removable part 131 of 130, and a electric heat element 150 with power supply.

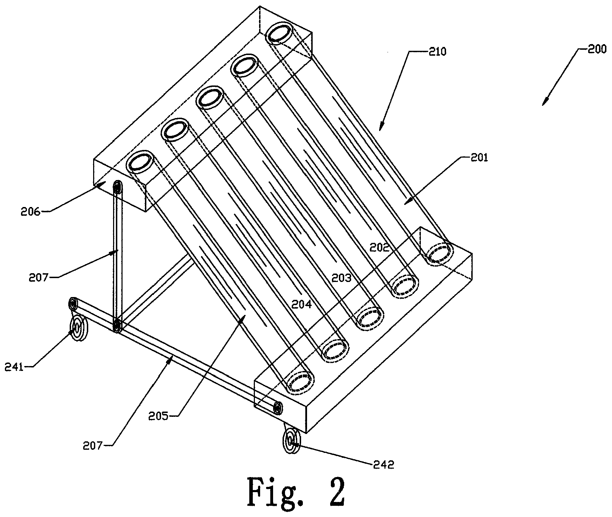

The solar heat collector may be any kind of solar heat collector that can heat the heat storage and conducting material 120 to the temperature higher than the water boiling temperature. In this case, the solar heat collector 110 is an evacuated-tube solar heat collector. It may also be a group of modular evacuated-tube solar heat collectors that are mounted in a certain shape, e.g. in a parallel row, in a full or partial cone-shaped column as per the example shown in Fig 2. The solar heat collector 110 has a removable part 114 with two holes 1141 and 1142. The hole 1141 is a path for the power cable and air. The hole 1142 is to continue the hole 1311 for releasing of cooking steam.

The evacuated-tube solar heat collector 110 has a transparent outer layer 111 and an inner layer 112. It is evacuated in between. The inner layer 112 has a heat absorbing coating that is not shown in Fig 1. The evacuated-tube solar heat collector 110 has the same material and manufacture processing as the evacuated-tube solar heat collector that is used for solar water heating. But the evacuated-tube solar heat collector used in solar cooking has a larger diameter and a shorter length compared to the regular evacuated- tube.

The evacuated-tube solar heat collector 110 is made of glass. In case the glass tube is broken, the glass pieces are dangerous for the user. So the solar heat collector has a transparent plastic cover for safety reason, (not shown in Fig. 1). The transparent plastic cover can be either a mantle for each tube or a protective cover for an entire collector panel. But the plastic protective mantles may reduce the efficiency of the solar heat collector. So an evacuated toughened-glass tube solar heat collector is a better solution.

The heat and conducting material 120 in this case is salt or quartz sand for storing the solar heat and transferring heat to the cooking utensil 130. In fact, many kinds of materials can be used as the solar heat storage and conducting material. They are solid materials such as salt and sand. The cook takes place in the tube where the utensil is located, so food safety needs to given special attention. In this invention, we prefer salt, quartz or basalt sand and large pieces of metal. For the heat conducting material, metal or alloy conductors and heat tubes are used.

Fig. 1 shows the heat conducting material 121. In this case, this is a copper conductor in a T shape inserted in the heat storage and conducting material 120 for faster transferring the solar heat to the cooking utensil 130.

The cooking utensil 130 is a cylinder container located inside of the solar heat collector 110 above the salt or sand 120. It is made of stainless steel. The cooking utensil 130 has a removable part 131 with a hole 1311, it is a stopper inserted in the cooking utensil 130. The utensil has a diameter near but not bigger than the inner diameter of the evacuated-tube solar heat collector 110. A pleated structure 133 is on the wall of the container from the top to the bottom to provide a gap and patch for air exchange and a power cable 151. Furthermore it allows a minor adjustable diameter for the container 130. The cooking utensil 130 further includes a removable and detachable handle 135 at the inner wall for removing the utensil 130 from the solar heat collector 110.

In Fig.1, the utensil 130 is a food steamer. Three layers of steam basket are arranged in the utensil above the water in the bottom. The food is cooked on the steam basket. In fact, the cylinder container, i.e. the utensil 130, can be many kinds of utensils. We can have a set of cylinder containers for different cooking purposes. For example, a second container can have water and coffee or tea for cooking - It is a solar coffee/tea maker. A third container can have a wire mesh container to hold food when frying and drain them after cooking - It is a solar cooking fryer. A fourth container can have a whisker net made of several curved and intersecting steel wires used to press the food sheets close to the inner wall of container for roasting or baking. A fifth container can bake and roast breads and cookies. Of course, if in the container food and water are arranged for braising or boiling -
It is a cooking wok or pot. Based on the above descriptions, it is believed that other modifications to the utensils used in this solar heat collector 110 will be apparent to those skilled in the art and, therefore, the invention is defined in the claims.

A removable part 114 covers the top of solar heat collector 110. It has two holes 1141 and 1142. The first hole 1141 connects to said gap and path for air exchange and the power cable 133. The second hole 1142 continues the hole 1311 in the stopper 131 of the container 130. The stopper may be a plant fibril cork with an air gap or a hole.

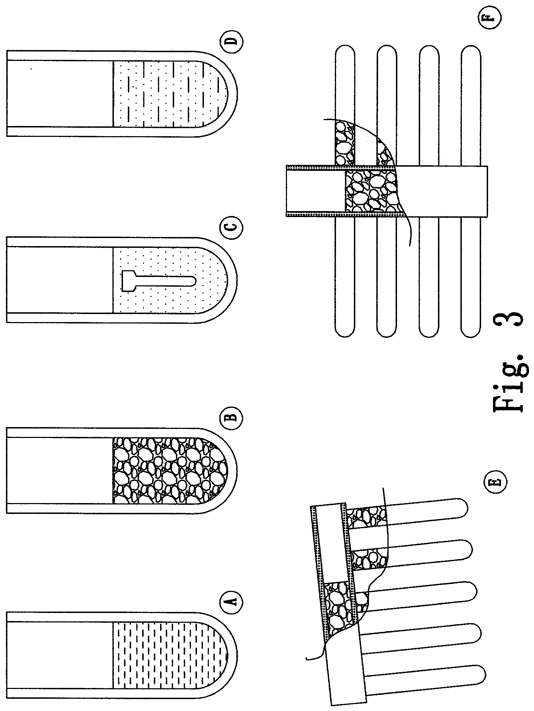

The electric heat element 150 with power supply is a very low power electric heat element. It is located under the cooking utensil 130 and within the heat storage and conducting material 120. A power cable 151 has very high resistive heat temperature that connects the electric heat element 150 to power supply plug 152 outside of the solar heat collector 110, through the path formed by a pleated structure 133 on the walls of the utensil 130. The electric heat element 150 may further include a measuring, indicating and controlling system for the solar cooking appliance's operating characteristic parameters, e.g. timing, temperature, pressure, moisture etc. This equipment is not shown in Fig. 1. The electric heat element with power supply can be removed from the set of cooking appliance. In this case the set of solar cooking appliances is still a complete cooking appliance that uses solar heat as the only energy source. Fig. 3 shows the solar heat collectors without electric heat element.

Sometimes the evacuated-tubes are mounted in a row for cooking several foods at the same time.

Refer to Fig. 2, a set of solar cooking appliances 200 is illustrated schematically in a perspective view. Five evacuated tube solar heat collectors 201, 202, 203, 204 and 205 are mounted in a parallel raw.

A fixing and supporting trestle 206 arranges and supports the five solar heat collectors at the proper locations and situations. The movable support 207 allows the adjustment of the incidence angle of the solar heat collector 210 to the sunlight. Four wheels 241, 242, 243 and 244 are installed in the four bottom corners of the supporting trestle 206 for adjusting the direction of the solar heat collector 210. (243 and 244 are not shown in Fig.2). A sundial (not shown in Fig. 2) is a cone bar. It attaches to the solar heat collector 210 perpendicularly for indicating the incidence angle of sunlight.

A light reflecting object (not shown in Fig. 2) is equipped under the evacuated-tube for focusing the surrounding sun light to the solar heat collector;

When the solar light shines on the solar heat collector 210, the cooking processing in each utensil is the same as the processing mentioned in Fig. 1. We'll not repeat it again.

Referring to Fig. 3, a set of exemplary solar heat collectors are illustrated schematically in vertical sections.

Fig. 3A is a schematic vertical section view of an evacuated-tube solar heat collector partially filled with liquid heat storage and conduction material, e.g. water or oil. In some cases, water can also be a heat transferring medium for food cooking.

Fig. 3B is a schematic vertical section view of an evacuated-tube solar heat collector partially filled with solid heat storage and conduction material, e.g. ore stone or turves.

Fig. 3C is a schematic vertical section view of an evacuated-tube solar heat collector partially filled with sand and having a heat tube or a heat conductor as the heat transferring medium.

Fig. 3D is a schematic vertical section view of an evacuated-tube solar heat collector partially filled with a combination of solid and liquid heat storage and conducting materials, e.g. quartz sand and cooking oil.

Fig. 3E is a schematic partial vertical section view of a group of modular evacuated-tube solar heat collectors that are mounted in a vertical parallel row.

Fig. 3F is a schematic partial vertical section view of a group of modular evacuated-tube solar heat collectors that are mounted in a horizontal parallel row.

When setting up a solar cooking appliance, not only these kinds of solar heat collectors but also more kinds of their varieties and combinations can be selected and used.

Based on the detailed description of the samples, other modifications will be apparent to those skilled in the art and, therefore, the invention is defined in the claims.

## Claims

1. A solar cooking appliance (100), comprising:
a solar heat collector (110) to collect and store solar heat, having:
a solid heat storage and conducting material (120) partially filling said solar heat collector (110), wherein said solar heat collector (110) can heat said solid heat storage and conducting material (120) to a temperature higher than the water boiling temperature;
a solar cooking utensil (130) removably located within the solar heat collector (110), wherein said solar cooking utensil is sized to fit a size and shape of the internal size and shape of the solar heat collector (110), and said utensil (130) having a wall which is thermally connected to the internal wall of the solar heat collector (110) and the solid heat storage and conducting material (120) to transfer heat to the utensil, and said utensil (130) having a removable part (131) for opening and closing said utensil (130); and
a heat conducting material (121) inserted in said heat storage and conducting material (120) for faster transferring the solar heat to said cooking utensil (130), wherein said heat conducting material (121) is selected from a group of a heat tube and a heat conductive conductor;
**characterized in that** said solar cooking utensil (130) has a pleated structure (133) on said wall to provide a gap and path for air exchange and allow minor adjustment of a diameter of the utensil (130).

2. The solar cooking appliance, according to claim 1 further comprising:
an electric heat element (150).

3. The solar cooking appliance according to claim 1, wherein said solar heat collector (110) is selected from a group of: an evacuated-tube solar heat collector and a plurality of modular evacuated-tube solar heat collectors.

4. The solar cooking appliance according to claim 3, wherein said evacuated-tube solar heat collector (110) is selected from a group of: an evacuated- tube solar heat collector comprising: a transparent cover, an evacuated toughened-glass tube solar heat collector and a evacuated-tube solar heat collector with a transparent plastic protective mantle for safety reasons.

5. The solar cooking appliance according to claim 1, wherein said solid heat storage and conducting material (120) is selected from a group of: salt, sand, quartz sand, a solid chemical material, a solid multi- H₂O chemical material, a basalt sand, a heat conductor made of metal, copper, heat conductive alloy, and a combination of two or more above mentioned heat storage and conducting materials.

6. The solar cooking appliances according to claim 1, wherein said solid heat storage and conducting material (120) is selected from a group of:
a combination of two or more different solid materials, and
said solid heat storage and conduction material (120) mixing with a few liquid material, wherein said liquid material can be heated to a temperature higher than the water boiling temperature.

7. The solar cooking appliances according to claim 6, wherein said solid heat storage and conducting material (120) is selected from a group of: quartz sand containing colza oil and basalt sand containing bean oil.

8. The solar cooking appliance according to claim 1, wherein said solar cooking utensil is a stainless steel container, said container has a removable and detachable handle at an internal wall, and the pleated structure is provided on an external wall from top to bottom.

9. The solar cooking appliance according to claim 1, wherein said solar cooking utensil (130) is a coffee and/or tea maker.

10. The solar cooking appliance according to claim 1, wherein said solar cooking utensil (130) further comprises a part selected from a group of:
a fryer with a wire mesh for frying and draining a food,
a whisker net to press the food to an internal wall of said utensil for food roasting and baking, and a wok and a pot.

11. The solar coking appliance, according to claim 1, wherein said solar cooking utensil (130) is a pan, wherein one or more small frying pan(s) in parallel are suspended in the utensil for fry, sauté or brown a food.

12. The solar cooking appliance according to claim 1, further including one or more of
a trestle (206) for arranging and supporting the parts of the solar cooking appliances (100),
an inclining structure (207) for adjusting angle of said solar heat collector (110) to sunlight,
a directional structure (241-244) for adjusting direction of said solar heat collector (110) to sunlight,
a light reflector to focus surrounding sunlight to the solar heat collector (110), and
a sundial attached to the solar heat collector (110) perpendicularly for showing the angle of the sun light.

13. The solar cooking appliance according to claim 1, further comprising a bag and/or a membrane for wrapping or covering a food to be cooked in the solar cooking appliance (100), wherein said bag and/or membrane is made of a material selected from the group of a metal, a paper, a plastic and their combination.

14. The solar cooking appliance according to claim 1, further comprising a suitcase for storing said solar cooking appliance (100) to form a portable solar cooking appliance.

15. The solar cooking appliance according to claim 2, wherein said electric heat element (150) is selected from a group of:
an electric heater (150) comprising a power cable (151) having very high heat resistant temperature connected to an electric heating element (150) via a power supply plug (152) outside of the solar heat collector (110) through a path formed by the pleated structure (133) on the walls of the container;
an electric heater (150) comprising an operating data measuring device and a data indicating device, wherein said operating data is selected from a group of : operating duration, temperature, pressure, moisture, and a combination of any operating data;
an electric heater (150) with a controlling system for the solar cooking appliance's operating data, wherein said operating data is selected from a group of: a timing; a temperature; a pressure; a moisture and a hybrid combination of above mentioned data.

## Patentansprüche

1. Solarkochvorrichtung (100), die Folgendes umfasst:
einen Solarwärmekollektor (110) zum Sammeln und Speichern von Solarwärme mit:
einem festen Wärmespeicherungs- und -leitungsmaterial (120), das den genannten Solarwärmekollektor (110) teilweise füllt, wobei der genannte Solarwärmekollektor (110) das genannte feste Wärmespeicherungs- und - leitungsmaterial (120) auf eine Temperatur über der Wassersiedetemperatur erhitzen kann;
einem Solarkochgeschirr (130), das entfernbar in dem Solarwärmekollektor (110) positioniert ist, wobei das genannte Solarkochgeschirr so bemessen ist, dass es in Größe und Form zur internen Größe und Form des Solarheizkollektors (110) passt, und das genannte Geschirr (130) eine Wand aufweist, die mit der Innenwand des Solarheizkollektors (110) und dem festen Wärmespeicherungs- und -leitungsmaterial (120) thermisch verbunden ist, um Wärme zu dem Geschirr zu übertragen, und wobei das genannte Geschirr (130) einen entfernbaren Teil (131) zum Öffnen und Schließen des genannten Geschirrs (130) hat; und
einem wärmeleitenden Material (121), das in das genannte Wärmespeicherungs- und -leitungsmaterial (120) zum schnelleren Übertragen der Solarwärme auf das genannte Kochgeschirr (130) eingesetzt ist, wobei das genannte wärmeleitende Material (121) aus einer Gruppe aus einem Wärmerohr und einem wärmeleitfähigen Leiter ausgewählt ist;
**dadurch gekennzeichnet, dass** das genannte Solarkochgeschirr (130) eine Faltenstruktur (133) auf der genannten Wand hat, um eine Lücke und einen Pfad für Luftaustausch bereitzustellen und geringfügige Justierungen eines Durchmessers des Geschirrs (130) zuzulassen.

2. Solarkochvorrichtung nach Anspruch 1, die ferner ein elektrisches Heizelement (150) umfasst.

3. Solarkochvorrichtung nach Anspruch 1, wobei der genannte Solarwärmekollektor (110) ausgewählt ist aus einer Gruppe bestehend aus einem Vakuumröhren-Solarwärmekollektor und mehreren modularen Vakuumröhren-Solarwärmekollektoren.

4. Solarkochvorrichtung nach Anspruch 3, wobei der genannte Vakuumröhren-Solarwärmekollektor (110) ausgewählt ist aus einer Gruppe bestehend aus einem Vakuumröhren-Solarwärmekollektor mit einer transparenten Abdeckung, einem Vakuumröhren-Solarwärmekollektor aus gehärtetem Glas und einem Vakuumröhren-Solarwärmekollektor mit einem transparenten Kunststoffschutzmantel aus Sicherheitsgründen.

5. Solarkochvorrichtung nach Anspruch 1, wobei das genannte feste Wärmespeicherungs- und -leitungsmaterial (120) ausgewählt ist aus einer Gruppe bestehend aus Salz, Sand, Quarzsand, einem festen chemischen Material, einem festen chemischen Multi-H₂O-Material, einem Basaltsand, einem Wärmeleiter bestehend aus Metall, Kupfer, wärmeleitfähiger Legierung und einer Kombination von zwei oder mehr der oben erwähnten Wärmespeicherungs- und -leitungsmaterialien.

6. Solarkochvorrichtung nach Anspruch 1, wobei das genannte feste Wärmespeicherungs- und -leitungsmaterial (120) ausgewählt ist aus einer Gruppe bestehend aus einer Kombination von zwei oder mehr unterschiedlichen festen Materialien und dem genannten festen Wärmespeicherungs- und -leitungsmaterial (120) im Gemisch mit einigen flüssiges Material, wobei das genannte flüssige Material auf eine Temperatur über der Wassersiedetemperatur erhitzt werden kann.

7. Solarkochvorrichtung nach Anspruch 6, wobei das genannte feste Wärmespeicherungs- und -leitungsmaterial (120) ausgewählt ist aus einer Gruppe bestehend aus Rapsöl enthaltendem Quarzsand und Bohnenöl enthaltendem Basaltsand.

8. Solarkochvorrichtung nach Anspruch 1, wobei das genannte Solarkochgeschirr ein Edelstahlbehälter ist, wobei der genannte Behälter einen entfernbaren und lösbaren Griff an einer Innenwand hat und die Faltenstruktur an einer Außenwand von oben nach unten vorgesehen ist.

9. Solarkochvorrichtung nach Anspruch 1, wobei das genannte Solarkochgeschirr (130) eine Kaffee- und/oder Teemaschine ist.

10. Solarkochvorrichtung nach Anspruch 1, wobei das genannte Solarkochgeschirr (130) ferner einen Teil umfasst, der ausgewählt ist aus einer Gruppe bestehend aus einer Fritteuse mit einem Drahtgeflecht zum Frittieren und Abfließenlassen eines Lebensmittels, einem Haardrahtnetz zum Pressen des Lebensmittels gegen eine Innenwand des genannten Geschirrs zum Rösten und Backen von Lebensmittel, sowie einem Wok und einem Topf.

11. Solarkochvorrichtung nach Anspruch 1, wobei das genannte Solarkochgeschirr (130) eine Pfanne ist, wobei eine oder mehrere kleine Bratpfannen parallel in dem Geschirr zum Frittieren, Sautieren oder Bräunen eines Lebensmittels aufgehängt sind.

12. Solarkochvorrichtung nach Anspruch 1, die ferner eines oder mehrere der Folgenden umfasst:
ein Gestell (206) zum Anordnen und Tragen der Teile der Solarkochvorrichtung (100),
eine Neigungskonstruktion (207) zum Justieren des Winkels des genannten Solarwärmekollektors (110) zum Sonnenlicht,
eine Richtungskonstruktion (241-244) zum Justieren der Richtung des genannten Solarwärmekollektors (110) zum Sonnenlicht,
einen Lichtreflektor zum Fokussieren des Umgebungssonnenlichts auf den Solarwärmekollektor (110), und
eine Sonnenuhr, die lotrecht an dem Solarwärmekollektor (110) angebracht ist, um den Winkel des Sonnenlichts anzuzeigen.

13. Solarkochvorrichtung nach Anspruch 1, die ferner einen Beutel und/oder eine Membran zum Einwickeln oder Abdecken eines zu kochenden Lebensmittels in der Solarkochvorrichtung (100) umfasst, wobei der/die genannte Beutel und/oder Membran aus einem Material besteht, das aus der Gruppe bestehend aus einem Metall, einem Papier, einem Kunststoff und deren Kombination ausgewählt ist.

14. Solarkochvorrichtung nach Anspruch 1, die ferner einen Tragkoffer zum Verstauen der genannten Solarkochvorrichtung (100) umfasst, um eine tragbare Solarkochvorrichtung zu bilden.

15. Solarkochvorrichtung nach Anspruch 2, wobei das genannte elektrische Heizelement (150) ausgewählt ist aus einer Gruppe bestehend aus:
einer Elektroheizung (150), die ein Stromkabel (151) mit einer sehr hohen Wärmewiderstandstemperatur umfasst, verbunden mit einem elektrischen Heizelement (150) über einen Stromversorgungsstecker (152) außerhalb des Solarwärmekollektors (110) über einen durch die Faltenstruktur (133) an den Wänden des Behälters gebildeten Pfad;
einer Elektroheizung (150), die eine Betriebsdatenmessvorrichtung und eine Datenanzeigevorrichtung umfasst, wobei die genannten Betriebsdaten ausgewählt sind aus einer Gruppe bestehend aus Betriebsdauer, Temperatur, Druck, Feuchtigkeit und einer Kombination von beliebigen Betriebsdaten;
einer Elektroheizung (150) mit einem Steuersystem für die Betriebsdaten der Solarkochvorrichtung, wobei die genannten Betriebsdaten ausgewählt sind aus einer Gruppe bestehend aus Zeit; Temperatur; Druck; Feuchtigkeit und einer Hybridkombination von oben erwähnten Daten.

## Revendications

1. Appareil de cuisson solaire (100) comprenant :
un collecteur de chaleur solaire (110) pour recueillir et stocker la chaleur solaire ayant :
un matériau de stockage et de conduction de chaleur solide (120) remplissant partiellement ledit collecteur de chaleur solaire (110), dans lequel le collecteur de chaleur solaire (110) est apte à chauffer ledit matériau de stockage et de conduction de chaleur solide (120) jusqu'à une température supérieure à la température d'ébullition de l'eau ;
un ustensile de cuisson solaire (130) placé de façon amovible à l'intérieur du collecteur de chaleur solaire (110), ledit ustensile de cuisson étant dimensionné pour s'adapter à une taille et à une forme de la taille et de la forme interne du collecteur de chaleur solaire (110), et ledit ustensile (130) ayant une paroi qui est thermiquement reliée à la paroi interne du collecteur de chaleur solaire (110) et au matériau de stockage et de conduction de chaleur solide (120) pour transmettre la chaleur à l'ustensile, et ledit ustensile (130) ayant une partie amovible (131) pour ouvrir et fermer ledit ustensile (130) ; et
un matériau conducteur de chaleur (121) inséré dans ledit matériau de stockage et de conduction de chaleur (120) pour une transmission plus rapide de la chaleur solaire audit ustensile de cuisson (130), le matériau conducteur de chaleur (121) étant sélectionné dans un groupe parmi un tube thermique et un conducteur chauffant ;
**caractérisé en ce que** l'ustensile de cuisson solaire (130) a une structure plissée (133) sur ladite paroi afin de procurer un espace et une trajectoire pour un échange d'air et de permettre un ajustage mineur d'un diamètre de l'ustensile (130).

2. Appareil de cuisson solaire, selon la revendication 1, comprenant en outre un élément chauffant électrique (150).

3. Appareil de cuisson solaire selon la revendication 1, dans lequel ledit collecteur de chaleur solaire (110) est sélectionné dans un groupe constitué : d'un collecteur de chaleur solaire à tube sous vide et d'une pluralité de collecteurs de chaleur solaire à tube sous vide modulaires.

4. Appareil de cuisson solaire selon la revendication 3, dans lequel ledit conducteur de chaleur solaire à tube sous vide (110) est sélectionné dans un groupe constitué :
d'un collecteur de chaleur solaire à tube sous vide comprenant :
un couvercle transparent, un collecteur de chaleur solaire à tube sous vide en verre renforcé et un collecteur de chaleur solaire à tube sous vide doté d'un manteau de protection en plastique transparent à des fins de sécurité.

5. Appareil de cuisson solaire selon la revendication 1, dans lequel ledit matériau de stockage et de conduction de chaleur solide (120) est sélectionné dans un groupe constitué : de sel, de sable, de sable de quartz, d'un matériau chimique solide, d'un matériau chimique multi-H₂O solide, d'un sel de basalte, d'un conducteur de chaleur fait de métal, de cuivre, d'un alliage conducteur de chaleur et d'une combinaison de deux ou de plusieurs des matériaux de stockage et de conduction de chaleur susmentionnés.

6. Appareils de cuisson solaire selon la revendication 1, dans lesquels ledit matériau de stockage et de conduction de chaleur (120) est sélectionné dans un groupe constitué :
d'une combinaison de deux ou de plusieurs matériaux solides différents, et
d'un mélange dudit matériau de stockage et de conduction de chaleur solide (120) à un matériau liquide quelconque, ledit matériau liquide pouvant être chauffé jusqu'à une température supérieure à la température d'ébullition de l'eau.

7. Appareils de cuisson solaire selon la revendication 6, dans lesquels ledit matériau de stockage et de conduction de chaleur solide (120) est sélectionné dans un groupe constitué : de sable de quartz contenant de l'huile de colza et de sel de basalte contenant de l'huile de soja.

8. Appareils de cuisson solaire selon la revendication 1, dans lequel l'ustensile de cuisson solaire est un contenant en acier inoxydable, ledit contenant ayant une poignée amovible et détachable fixée au niveau d'une paroi interne et la structure plissée étant prévue montée de haut en bas sur une paroi externe.

9. Appareil de cuisson solaire selon la revendication 1, dans lequel ledit ustensile de cuisson solaire (130) est une cafetière et/ou une théière.

10. Appareil de cuisson solaire selon la revendication 1, dans lequel ledit ustensile de cuisson solaire (130) comprend en outre une partie constitutive sélectionnée dans un groupe constitué :
d'une friteuse dotée d'un treillis métallique pour faire frire et égoutter un aliment,
d'un filet à maillage fin pour presser l'aliment contre une paroi interne dudit ustensile pour faire rôtir et faire cuire des aliments, et d'un wok ainsi que d'une casserole.

11. Appareil de cuisson solaire, selon la revendication 1, dans lequel ledit ustensile de cuisson solaire (130) est une poêle, une ou plusieurs petites poêles étant suspendues en parallèle dans l'ustensile pour faire frire, faire revenir ou faire dorer un aliment.

12. Appareil de cuisson solaire selon la revendication 1, comprenant en outre un ou plusieurs tréteaux (206) pour disposer et soutenir les parties constitutives des appareils de cuisson solaire (100),
une structure inclinée (207) pour ajuster l'angle dudit collecteur de chaleur solaire (110) en fonction de la lumière du soleil,
une structure directionnelle (241-244) pour ajuster la direction dudit collecteur de chaleur solaire (110) en fonction de la lumière du soleil,
un réflecteur de lumière pour concentrer la lumière du soleil environnante sur le collecteur de chaleur solaire (110), et
un cadran solaire fixé perpendiculairement au collecteur de chaleur solaire (110) de sorte à indiquer l'angle de la lumière du soleil.

13. Appareil de cuisson solaire selon la revendication 1, comprenant en outre un sac et/ou une membrane pour envelopper ou couvrir un aliment à cuire dans l'appareil de cuisson solaire (100), le sac et/ou la membrane étant fait(s) d'un matériau sélectionné dans le groupe constitué d'un métal, d'un papier, d'un plastique et de leur combinaison.

14. Appareil de cuisson solaire selon la revendication 1, comprenant en outre une mallette pour stocker ledit appareil de cuisson solaire (100) afin d'obtenir un appareil de cuisson solaire portable.

15. Appareil de cuisson solaire selon la revendication 2, dans lequel ledit élément chauffant électrique (150) est sélectionné dans le groupe constitué :
d'un réchauffeur électrique (150) comprenant un câble d'alimentation (151) ayant une température de résistance à la chaleur très élevée relié à un élément chauffant électrique (150) par l'intermédiaire d'une fiche d'alimentation électrique (152) montée à l'extérieur du collecteur de chaleur solaire (110) en passant à travers un chenal formé par la structure plissée (133) sur les parois du contenant ;
d'un réchauffeur électrique (150) comprenant un dispositif de mesure des données de fonctionnement et un dispositif d'affichage des données, dans lequel lesdites données de fonctionnement sont sélectionnées dans un groupe constitué : de la durée de fonctionnement, de la température, de la pression, de la teneur en humidité et d'une combinaison de toutes données de fonctionnement ;
d'un réchauffeur électrique doté d'un système de commande des données de fonctionnement de l'appareil de cuisson solaire, dans lequel les données de fonctionnement sont sélectionnées dans un groupe constitué : du minutage ; de la température ; de la pression ; de la teneur en humidité et d'une combinaison hybride des données susmentionnées.
